# EUROPEAN PATENT SPECIFICATION

(11) **EP 3 148 165 B1**
(45) Date of publication and mention of the grant of the patent: **07.08.2019**
(21) Application number: 16189939.8
(22) Date of filing: 21.09.2016
(51) Int. Cl.: H04L 29/12, G06F 21/10

(54) **CONTROLLING ACCESS TO NETWORK RESOURCES**
STEUERUNG DES ZUGRIFFS AUF NETZWERKRESSOURCEN
CONTRÔLE D'ACCÈS À DES RESSOURCES DE RÉSEAU

(30) Priority: 22.09.2015 US 201562222116 P; 15.01.2016 US 201662279468 P
(43) Date of publication of application: 29.03.2017
(73) Proprietor: Instart Logic Inc., Palo Alto, CA 94306 (US)
(72) Inventor: RESHADI, Mohammad H, Palo Alto, CA California 94306 (US); GAUNKER, Rajaram, Palo Alto, CA California 94306 (US); KOLAM, Hariharan, Palo Alto, CA California 94306 (US); VENKAT, Raghu Batta, Palo Alto, CA California 94306 (US)
(74) Representative: EIP

(56) References cited:
- WO-A1-2014/191968
- US-A1- 2012 163 598
- US-A1- 2015 163 087

## Description

### FIELD

The present disclosure relates to methods and systems for controlling access to network resources. In particular, but not exclusively, the present disclosure relates to controlling access to network resources that are requested from a web browser.

### BACKGROUND

A web browser may comprise functionality that is configured to access and request resources embedded within a webpage to be rendered by the web browser. The content modification functionality may be provided as a default or native function of the web browser, or may be provided by a third party add-on or extension. In some examples, the third party add-on may be configured to modify, substitute or block one or more particular types of resources associated with the webpage prior to rendering by the web browser.

Such content modification functionality may typically utilise a range of techniques to modify the webpage. These techniques include (i) adding content to the webpage prior to rendering by the web browser; (ii) removing content from the webpage prior to rendering by the web browser; (iii) blocking retrieval of content by the web browser prior to rendering by the web browser; (iv) substituting content associated with the webpage prior to rendering by the web browser; and (v) modifying one or more display attributes associated with content prior to rendering by the web browser. Typically, these modifications are performed automatically as a background process and without the knowledge or explicit consent of a user of the web browser or a publisher of the web content. Moreover, these modifications may negatively impact the functionality and aesthetics of the content, thereby compromising the integrity of the webpage.

US 2015/0163087 A1 discloses systems and techniques for transparently intercepting and optimizing resource requests. US 2012/0163598 A1 discloses systems, methods and software to provide session secure web content delivery. WO 2014/191968 discloses a method and system for generating a protected version of digital content.

### SUMMARY

According to an aspect of the present disclosure there are provided methods and non-transitory computer-readable storage mediums for controlling access to network resources, as set out in the appended claims.

According to a first aspect of the present disclosure, there is provided a method of controlling access to network resources requested by a client device, the method comprising: receiving a first request at a proxy server, the proxy server acting as a proxy between the client device and a content provider, the first request being for web content from a web browser installed on the client device, and the requested web content originating at the content provider and comprising one or more executable instructions; and delivering the requested web content and a script to the web browser, the script being executable in the web browser while a document object model corresponding to the web content is built, to: intercept a second request for a resource by trapping an API call to an interface of the document object model, the second request comprising a resource identifier associated with a resource of the web content of the first request, the resource being located at the content provider, and the second request being generated by execution of the one or more executable instructions by the web browser; mask the resource identifier through at least one of encryption, hashing, and obfuscation to produce a transformed resource identifier; thereafter: insert said transformed resource identifier into the document object model, such that a third party content modification component (114) associated with the web browser and that is capable of accessing the document object model does not recognize the resource and subsequently block retrieval of the resource associated with the transformed resource identifier; generate a third request for the web content, the third request comprising the transformed resource identifier, wherein the script is executable in the web browser to intercept a plurality of said second requests, and wherein the resource of at least one of the plurality of second requests is not a resource targeted by the third-party content modification component, whereby the transformed resource identifier of the corresponding third request corresponds to the resource that is not targeted, such that the third-party content modification component is unable to recognize the resource and determine that the resource is not targeted; receiving, by the proxy server, the third request; identifying, by the proxy server, the transformed resource identifier; translating, by the proxy server, the transformed resource identifier back to its original resource identifier in order to retrieve the resource from the content provider; obtaining the resources from the content provider; and providing the obtained resources to the web browser. In this manner, the script provides a means to ensure that the resource identifier generated by the one or more executable instructions in the web content is transformed to obfuscate the identity and/or location of the associated resource from other processes running in the web browser. For example, a content modification component of the browser may be prevented from identifying and blocking retrieval of the resource, by virtue of the transformed resource identifier. In this manner, the script provides means to ensure that the resource identifier generated by the one of more executable instructions in the web content is transformed prior to insertion into the document object model for the web content. This ensures that the identity and/or location of the associated resource is obfuscated from other processes running in the web browser which may access or scan the document object model.

According to some embodiments, the script is executable in the web browser to provide a wrapper function for the interface provided by the document object model, the wrapper function being configured to intercept the second request to invoke the interface provided by the document object model. In this manner, the script is configured to intercept and transform the resource identifier in a transparent manner, thereby ensuring that other processes running in the web browser are not "aware" of the transformation performed by the script. Moreover, use of a wrapper function ensures that no modification to the interface provided by the document object model is required.

According to some embodiments, the wrapper function is configured to invoke the interface provided by the document object model using the transformed resource identifier.

According to some embodiments, the second request comprises a request to invoke an interface provided by the script, and the interface provided by the script is configured to invoke an interface provided by a document object model maintained for the web content by the web browser using the transformed resource identifier. In this manner, the interface provided by the script may be explicitly integrated with the web content to utilise the transformation functionality provided by the script. For example, a publisher may configure the web content to integrate with the interface provided by the script to ensure that resource identifiers are transformed prior to insertion into the document object model maintained for the web content.

According to some embodiments, the second request is configured to invoke an interface provided by the web browser to retrieve the resource from a location remote from the web browser. In this manner, the script is configured to intercept and transform the resource identifier in a transparent manner, thereby ensuring that other processes running in the web browser are not "aware" of the transformation performed by the script. For example, a content modification component of the browser may be prevented from identifying and blocking retrieval of the resource by monitoring requests to the interface provided by the web browser.

According to some embodiments, the script is executable in the web browser to provide a wrapper function for the interface provided by the web browser, the wrapper function being configured to intercept the second request to invoke the interface provided by the web browser. In this manner, the script is configured to intercept and transform the resource identifier in a transparent manner, thereby ensuring that other processes running in the web browser are not "aware" of the transformation performed by the script. Moreover, use of a wrapper function ensures that no modification to the interface provided by the web browser is required.

According to some embodiments, the wrapper function is configured to invoke the interface provided by the web browser using the transformed resource identifier.

According to some embodiments, the method further comprises: processing, at the first server system, an original portion of the web content to produce a transformed portion; and delivering the web content including the transformed portion to the web browser; wherein the script is executable in the web browser to process the transformed portion of the web content to recover the original portion of the web content. In this manner, the script is executable in the web browser to "undo" the translation performed by the server system. For example, the script may recover the original portion of the web content in response to a determination that the web browser is not configured with a content modification component.

According to some embodiments, the method further comprises: receiving, at the first server system, a request for the resource from the web browser, the request comprising the transformed resource identifier; determining the resource identifier based on the transformed resource identifier; retrieving the resource to be rendered by the web browser using the resource identifier; and delivering the resource to the web browser. In this manner, the server system may recover the original resource identifier for use in retrieving the associated resource over a network for delivery to the web browser.

According to some embodiments, the script is executable in the web browser to mask at least a portion of the resource identifier, whereby to transform the resource identifier. In this manner, the script may obfuscate or otherwise prevent a content modification component of the web browser from identifying a resource of resource location.

According to some embodiments, the script is executable in the web browser to mask the portion of the resource identifier using at least one of an encryption algorithm, a hash algorithm and/or an obfuscation algorithm.

According to some embodiments, the method further comprises: delivering, by the first server system, a key to the web browser, the key being for use by the encryption algorithm.

According to some embodiments, the server system modifies the requested web content to include the key. In this manner, the server system may periodically change the key used to mask the resource identifier and ensure that the key is available to the script. For example, the server system may change the key on a periodic basis, or in response to a particular event, such as receiving a request for web content. This reduces the likelihood that a content modification component is able to determine the key based by observing the masked resource identifiers.

According to a second aspect of the present disclosure, there is provided a non-transitory computer-readable storage medium comprising computer-executable instructions which, when executed by a processor of a server system, cause the server system to perform a method according to the first aspect.

### DRAWINGS

Further features and advantages of the invention will become apparent from the following description of preferred embodiments of the invention, given by way of example only, which is made with reference to the accompanying drawings.
Figure 1 is a schematic diagram illustrating an example of a system for rendering a webpage.
Figure 2 is a schematic diagram illustrating an example of a web page definition for a webpage.
Figure 3 is a schematic diagram illustrating an example of a data structure for representing a web page.
Figure 4 is a schematic diagram illustrating an example of a system for controlling rendering of content in a web browser in accordance with an embodiment.
Figure 5 is a flowchart illustrating a process for generating a modified document object model, including providing a transformed version of web content according to an embodiment.
Figure 6 is a flowchart illustrating another process for providing a transformed version of web content according to an embodiment.
Figure 7 is a flowchart illustrating an embodiment of a process for providing a resource in response to a request according to an embodiment.
Figure 8 is a schematic depicting processing components of a server system and client device according to embodiments described herein.

### DESCRIPTION

Certain embodiments described herein relate to for controlling access to network resources. In particular, certain embodiments described herein provide techniques for protecting one or more portions of the content to prevent unauthorised modification by content modification functionality associated with the web browser, prior to retrieval of associated network resources. In this manner, rendering of the content can be controlled and the integrity of a webpage can be protected.

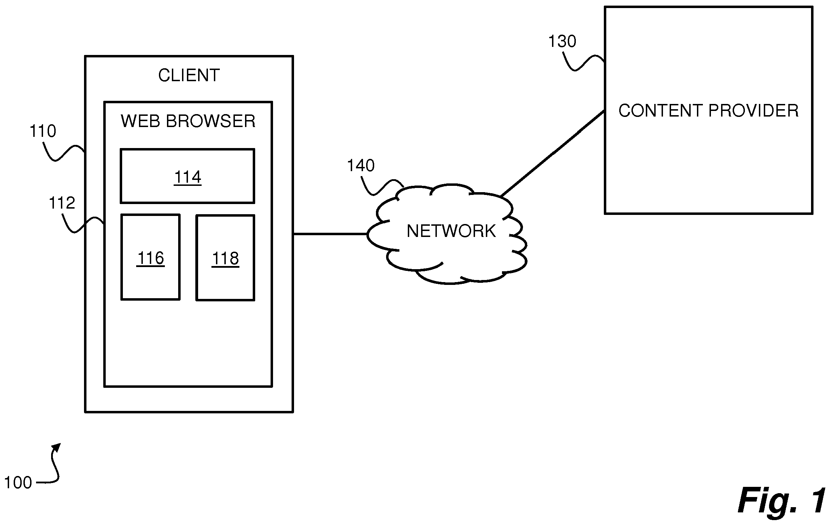

Figure 1 is a schematic diagram showing an example of a system 100 in accordance with an embodiment. The system 100 comprises a client device 110 and a content provider system 130, which are communicatively coupled through a network 140. The client device 110 is configured with a web browser 112 for retrieval and rendering of webpages from the content provider system 130. The client device 110 may comprise a laptop computer, a desktop computer, a tablet computer, a smartphone, or any other device capable of installing and running the web browser 112. The content provider system 130 may comprise a web server, such as an origin server or any other apparatus capable of serving webpages to the client device 110. The network 140 may comprise any combination of public or private networks, including intranets, local area networks (LANs), wide area networks (WANs), radio access networks (RANs), Wi-Fi networks and/or the Internet.

The web browser 112 is configured to receive a web page definition 116 from the content provider system 130 for rendering and presentation of a corresponding web page to a user of the client device 110. For example, the web browser 112 may retrieve the web page definition 116 from the content provider system 130 by issuing one of more network requests according to the Hypertext Transfer Protocol (HTTP) (e.g. one or more GET requests) or any other suitable protocol. The webpage definition 116 may comprise a file formatted according to one or more mark-up languages, such as Hypertext Mark-up Language (HTML) and/or Extensible Mark-up Language (XML). The webpage definition 116 may also comprise content in the form of executable code, defined in terms of one or more scripting languages, such JavaScript and/or JavaScript Object Notation (JSON). The webpage definition 116 may also comprise content in the form of one or more display attributes, defined in a style sheet language such as the Cascading Style Sheets (CSS) language.

The webpage definition 116 may be associated with one or more resources to be rendered with the webpage definition 116 by the web browser 112. Examples of such resources include image files, script files, video files, audio files, and the like. Typically, the resources are stored in one or more repositories that are located remote from the client device 110 and are retrieved by the web browser 112 prior to rendering of the associated webpage, or portion thereof. The web browser 112 may locate and retrieve the one or more resources based on one or more respective resource identifiers associated with the webpage definition 116. Examples of resource identifiers include Uniform Resource Identifiers (URIs) and Uniform Resource Locators (URLs). The one or more resource identifiers may be included in the webpage definition 116 retrieved by the web browser 112 and/or generated dynamically in response to execution of executable code associated with the webpage definition 116.

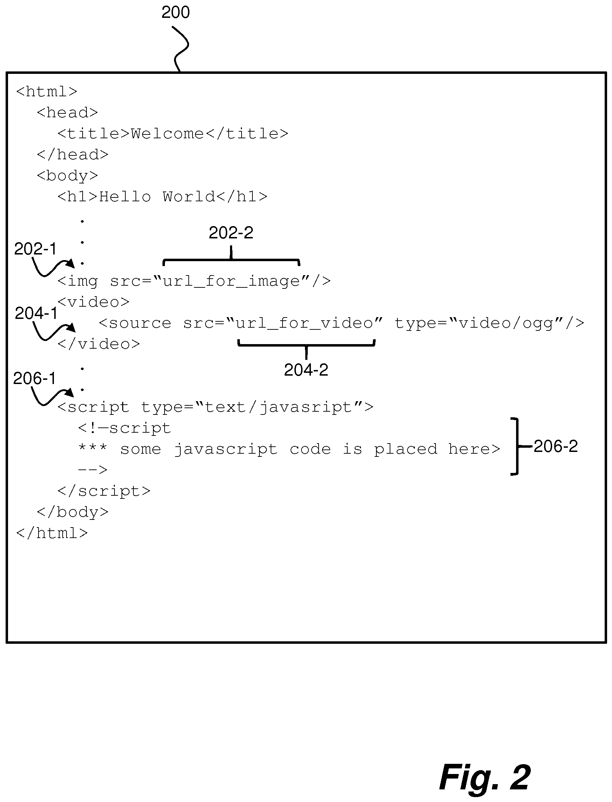

Figure 2 shows an example of the web definition 116 in the form of an HTML document. The exemplary web definition 116 comprises an image element 202-1, an image resource identifier 202-2, a video element 204-1, a video resource identifier 204-1, a script element 206-1, and one or more executable instructions 206-2 associated with the script element 206-1.

As is known in the art, upon receipt, the web browser 112 parses the web page definition 116 to build a data structure 118 representing the structure of the corresponding webpage in local memory associated with the web browser 112. For example, the data structure 118 may represent the webpage according the Document Object Model (DOM).

In this respect, the DOM is a standardized model for representing the various components of a webpage and is supported by various web browsers, including Internet Explorer and Microsoft Edge, developed and maintained by Microsoft Corporation of Redmond, Washington, United States of America; Mozilla Firefox, developed and maintained by the Mozilla Foundation of Mountain View, California, United States of America; and Google Chrome, developed and maintained by Google Inc. of Mountain View, California.. The DOM is a cross-platform and language-independent convention for representing and interacting with objects in HTML documents, as well as XHTML and XML documents. The DOM represents a webpage in terms of one or more objects that are arranged according to a hierarchy of nodes which are organised according to a tree structure. The one or more objects may be addressed and manipulated using one or more methods and the public interface of a DOM is specified in its application programming interfaces (APIs). The DOM standard includes a plurality of levels. For example, DOM levels 0 and 1 are the core standards supported by the majority of web browsers, while DOM level 2 and above are extensions to DOM levels 0 and 1, which are be optionally supported by web browsers. DOM levels 0 and 1 define a "core" set of objects and interfaces for accessing and manipulating document objects, and provide a complete model for representation of HTML documents, including the means to modify portions of the representation.

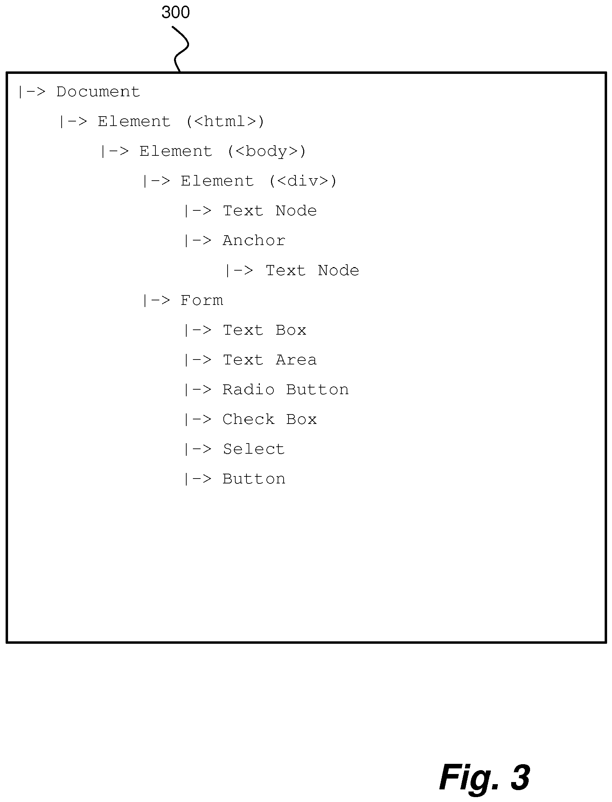

Figure 3 is a schematic diagram showing an example of a DOM tree 300. As shown in Figure 3, the topmost node, or root, of DOM tree 300 is the document object. A document object represents an entire HTML (or XML) document, and it provides the primary access to the document's data. An element within the document object, known as an element object, represents an element in the HTML document. Elements in the DOM tree 300 may include text, anchors, text-boxes, text areas, radio buttons, check boxes, selects, buttons, and the like.

With reference to the example shown in Figure 2, when web browser 112 prepares to render webpage 200 on a screen, web browser 112 parses the received HTML webpage file and builds a DOM tree to represent the various components and resources of webpage 200 in a local memory. For example, when the image tag (shown as <img src = "url for image"/> in Figure 2) is parsed by web browser 112, the image is represented as an image object, and the image object is inserted into the DOM tree.

Once the webpage definition 116 has been parsed by the web browser 112, the web browser 112 traverses or scans the data structure 118 to identify any resources referenced by the data structure 118 for retrieval over the network 140. For example, where the data structure 118 takes the form of a DOM tree, the web browser 112 examines each node in the DOM to identify any resources for retrieval over the network 140. For example, a node in the DOM tree corresponding to the image tag 202-1 in the webpage definition 116 will include the associated image resource identifier 202-2, and a node in the DOM tree corresponding to the video tag 204-1 in the webpage definition 116 will include the associated video resource identifier 204-2. Accordingly, as a result of traversing the DOM tree, the web browser 112 will proceed to fetch the image identified by the image resource identifier 202-2 and the video identified by the video resource identifier 204-2 for rendering in the web page. The web browser 112 therefore proceeds to issue separate network requests (e.g. HTTP GET requests) via the network 140 to fetch the image and video resources, based on the image resource identifier 202-2 and the video resource identifier 204-2 respectively. In other words, if the nodes of the DOM tree include N different resource identifiers, the web browser 112 may proceed to issue N separate resource requests (e.g., N separate HTTP GET requests) via the network 140 to requesting the associated resources, and in response the web browser 112 will receive N separate network responses (e.g., N separate HTTP GET responses), comprising the requested resources.

The webpage definition 116 may comprise one or more executable instructions which are executed by the web browser 112 upon receipt of the webpage definition 116. For example, when the webpage definition 116 takes the form of the HTML document 200 of Figure 2, the web browser 112 may execute the one or more executable instructions 206-2 included in the script element 206-1. In some cases, the one of more executable instructions 206-2, when executed by the web browser 112, may generate one or more resource identifiers associated with resources located remote from the web browser 112. In other words, the one or more executable instructions 206-2 may result in dynamic generation of one of more resource identifiers after the HTML document 200 is received at the web browser 112 (hereinafter termed "dynamic resource identifiers").

The one of more executable instructions 206-2 may cause the web browser 112 to fetch a resource associated with such a dynamic resource identifier. For example, the one or more executable instructions 206-2 may cause the web browser 112 to issue a network request (e.g. an HTTP GET request) to fetch the associated resource. In this respect, the one of more executable instructions 206-2 may utilise AJAX (Asynchronous JavaScript and XML) techniques to cause the web browser 112 to issue an HTTP GET network request for a resource associated with the dynamic resource identifier. In particular, the one of more executable instructions 206-2 may include JavaScript code which uses the XMLHttpRequest application programming interface (API) or the j Query library to request the resource associated with the dynamic resource identifier.

Returning to Figure 1, as is known in the art the web browser 112 may be configured with a third party content modification component 114. The content modification component 114 may be configured to take actions in respect of a particular resource associated with web page rendered by the web browser 112. For example, the content modification component 114 may be configured to prevent the web browser 112 from issuing a resource request associated the particular resource, or to cause the web browser 112 to fetch a different or alternative resource in place of the particular resource. To achieve these modifications, the content modification component 114 may employ one or more of blocking mechanisms.

According to a first known blocking mechanism, the content modification component 114 may traverse the data structure 118 representing the structure of the web page to identify one or more resource identifiers associated with resources to be fetched by the web browser 112. For example, where the data structure 118 takes the form of a DOM tree, the content modification component 114 may utilise one or more APIs provided by the DOM interface to examine each node in the DOM tree and identify resource locators. If the content modification component 114 identifies particular resource identifier of interest, it may proceed to take one or more actions to prevent retrieval or rendering of the associated resource. Examples of such actions include (i) modifying the particular resource identifier; (ii) substituting the particular resource identifier with an alternative resource identifier; or (iii) modifying a display attribute associated with the resource identifier.

According to a second known blocking mechanism, the content modification component 114 may utilise one or more APIs associate with a browser interface provided by the web browser 112 to monitor and block resource requests before they are sent to the network 140. An example of a browser interface is the chrome . webRequest API implemented by the Chrome web browser developed by Google Inc. of Mountain View, California, United States of America. In this manner, the content modification component 114 may initiate one or more "listeners" to intercept resource requests associated with particular resource identifiers. Upon interception of a resource request, the content modification component 114 may take one or more actions to prevent retrieval or rendering of the particular resource, such as (i) blocking the resource request; (ii) modifying the particular resource identifier associated with the resource request; or (iii) substituting the particular resource identifier with an alternative resource identifier in the resource request.

The first and second mechanisms discussed above can be partly circumvented by transforming resource locators in the web page definition 116 prior to delivery to the web browser 112. For example, the content provider system 130, or intermediary, in the network 140, may be configured to transform the one or more URLs in an HTML document to reduce the likelihood that the content modification component 114 will be able to identify the associated resources. In this manner, it is possible to reduce the likelihood that resources associate with the HTML document are blocked or modified by the content modification component 114 prior to rendering of the associated web page. However, such countermeasures are only available in respect of resource identifiers which are present in the web page definition 116 prior to delivery to the web browser 112 (i.e. static resource identifiers) and are not applicable to resource identifiers which are generated by execution of e.g. a script present in the web page definition 116 (i.e. dynamic resource identifiers). Accordingly, in order to maintain the integrity of the webpage, alternative or additional countermeasures are required to prevent blocking of resources associated with dynamic resource identifiers by the content modification component 114. Accordingly, certain embodiments described herein provide various techniques to prevent blocking of resources by the content modification component 114, with particular focus on dynamic resource identifiers.

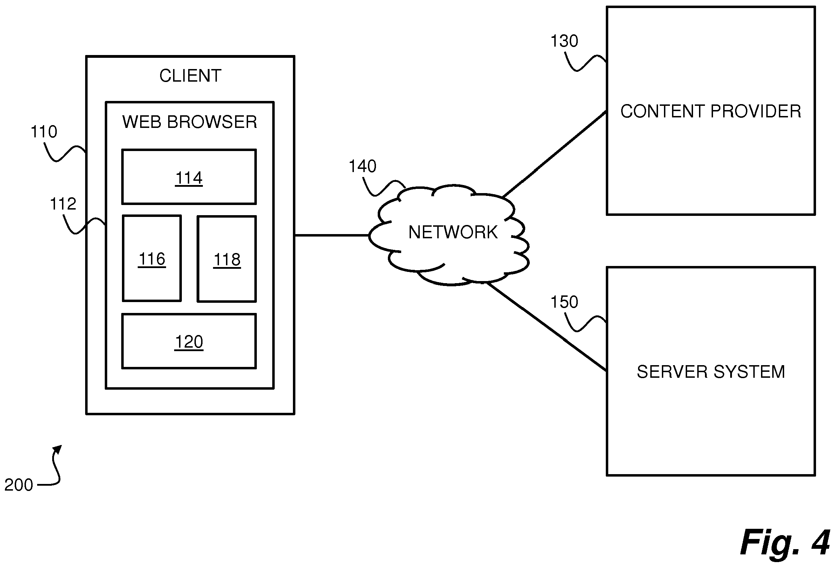

Figure 4 is a schematic diagram showing an example of a system 200 for controlling rendering of content in a web browser 112 in accordance with an embodiment. The system 200 of Figure 4 comprises a number of components which are common with the system 100 of Figure 1 and have been denoted using the same reference numerals. The system 200 of Figure 4 additionally comprises a server system 150 which acts as a proxy between the client device 110 and the content provider 130 and facilitates one of more countermeasures to protect the integrity of web content delivered from the content provider 130 to the client device 110 over the network 140. That is, the server system 150 is configured to act as an intermediary for request for webpages originating from the web browser 112 configured on the client device 110. In this respect, the server system 150 may operate transparently (i.e. without requiring any configuration of the web browser). In some examples, the server system 150 may comprise a proxy server, a gateway server, an edge server, or any other apparatus suitable for implementing the following techniques.

As described above, in some embodiments, the server system 150 may implement one or more server-side countermeasures to protect the integrity of web content delivered to the web browser 112. For example, the server system 150 may be configured to transform one or more static resource identifiers in a webpage definition 116 to be delivered to the client device 110 to prevent the content modification component 114 and/or network-side content blockers from identifying and blocking rendering of the associated resources. In other words, the server system 150 is configured to transform the one or more static resource identifiers to obfuscate the identity and/or of the associated resources in order to "spoof' any intermediate content modification components. Once the one or more static resource identifiers have been modified, the server system 150 proceeds to deliver a modified version of the webpage definition 116 comprising the transformed static resource identifiers to the web browser 112 for rendering.

As also discussed above, dynamic resource identifiers may be generated by one or more instructions included in the webpage definition 116 which are executed by the web browser 112. Accordingly, such dynamic resource identifiers are not available for transformation by the server system 150 prior to delivery to the web browser 112. Accordingly, the server system 150 may facilitate one of more client-side countermeasures by provisioning the web browser 112 with a component 120 that is executable within the web browser 112 to transform one or more dynamic resource identifiers originating from the one or more instructions in the webpage definition 116. For example, the component 120 may take the form of one or more scripts that are "injected" into the webpage definition file 116 by the server system 150. In some examples, the component 120 may take the form of one of more scripts written using the JavaScript language. Alternatively, the component 120 may take the form of a script that is "pre-delivered" to the web-browser prior to delivery of the webpage definition 116 by the server system 150. It is to be noted that, in relation to transformations that may have been applied by the server system 150 to static resource identifiers, component 120 is configured to process such transformed static resource identifiers in order to reverse the transformation and recover the original resource identifier.

According to some embodiments, the component 120 may be configured to control manipulation of the data structure 118 representing the structure of the webpage defined by webpage definition 116. For example, the component 120 may be configured to control access to a DOM tree by intercepting requests to the DOM interface. In effect, the component 120 serves as a virtualization layer to control access to the DOM interface. This virtualization may be facilitated by one or more wrapper functions in respect of one of more of the APIs provided by the DOM interface. In this manner, the component 120 is able to intercept requests and modify the DOM tree in a manner that is transparent to other processes running within the web browser 112 environment. In other words, the component 120 ensures that any other processes running within the web browser only have access to the transformed resource identifiers and thus are unable to determine the original identity of resources associate with the webpage. This virtualization of the DOM interface can be used by the component 120 to implement one or more client side optimisations of the webpage and, in particular, one or more client-side countermeasures to protect integrity of the webpage.

According to some embodiments, one optimization enabled by virtualization of the DOM involves translation of resource identifiers, whereby to cause the web browser 112 to request a resource from a content server other than that from which the resource would be requested without the translation. Another optimization enabled by virtualization of the DOM is masking or obfuscation of dynamic resource identifiers which are dynamically added to the DOM tree. In this manner, the component 120 is able to prevent the content modification component 114 from blocking or modifying network requests (e.g. HTTP GET requests) issued by the web browser 112 based on the masked or obfuscated resource identifiers stored in the DOM tree. For example, the component 120 may utilise one or more function wrappers to intercept a request to add or modify an object stored in the DOM tree, and transform any resource identifiers included in the request to prevent identification by the content modification component 114.

In some examples, the request to add or modify an object in the DOM tree may originate from one or more instructions in the webpage definition 116 which are executed by the web browser 112 to invoke the component 120. In this manner, the component 120 is able to transform dynamically generated resource identifiers before they are added to the DOM tree, thereby circumventing the content modification component 114. In some examples, the one of more instructions which invoke the component 120 may be inserted into the webpage definition 116 by the server system 150 prior to delivering the webpage definition 116 to the client device 110.

As discussed above, the content modification component 114 may utilise one or more APIs associated with a browser interface provided by the web browser 112 to monitor and block resource requests originating from one or more instructions included in the webpage before they are issued by the web browser 112. In some embodiments, the component 120 is configured to control access to the interface to "intercept" resource requests originating from the one or more instructions before they are monitored or blocked by the content modification component 114. To achieve this, the component 120 may implement one or more wrapper functions in respect of one or more APIs that cause the web browser 112 to issue network requests (e.g. HTTP GET requests). For example, the component 120 may implement one or more wrapper functions in respect of the XMLHttpRequest API to intercept requests for resources and obfuscate any resource identifiers included in the requests before they are monitored and potentially blocked by the content modification component 114. In some examples the requests to the XMLHttpRequest API may originate from a script, e.g. script 206-2 included in the webpage definition 116, which, when executed, generates one or more dynamic resource identifiers. Accordingly, in these embodiments, the component 120 is able to obfuscate the dynamic resource identifiers before they are monitored and potentially blocked by the content modification component 114.

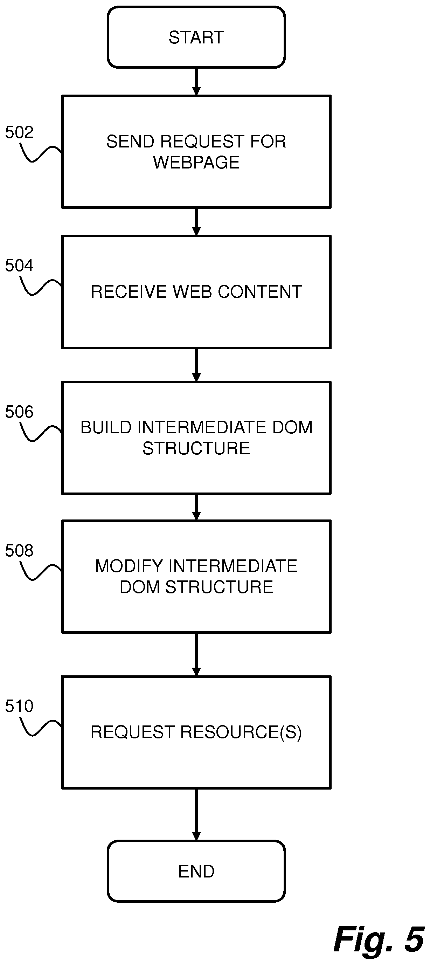

Figure 5 is a flowchart illustrating a process for requesting web content and generating a document object model corresponding thereto according to an embodiment.

At 502, desired web content is requested by the web browser 112 by sending an HTTP GET request message to a server (e.g., server system 150 or content provider system 130). Examples of the web content include a webpage, streaming content, a web application, a web resource, a resource of a webpage, and any other content accessible via the Internet. In some embodiments, the request includes an identifier of the requested content that is resolved to another identifier. For example, the GET request includes a URL (e.g., received from a user that types the URL or selects a link of the URL) and at least a portion of the URL is provided to a DNS server to translate at least a portion of the URL to an IP address to be utilized to request the web content. In some embodiments, the destination of the request is adjusted dynamically using the DNS server. For example, a mapping between a domain of a URL of the request and an associated IP address may be modified to modify a destination of the request such that the GET request is routed to the server system 150. In some embodiments, the requested web content is requested by an Adobe Flash application. In some embodiments, the requested web content is requested by a mobile application such as an Apple iOS application or a Google Android application.

At 504, alternative web content is received by the client device 110 in place of an original version of the requested web content to be rendered. For example, the alternative web content comprises placeholder content that includes component 120, hereinafter interchangeably referred to as "virtualization client". By providing the virtualization client 120 to the client device 110, the virtualization client 120 can request, intercept, and process, in particular, dynamically generated portions of the original requested web content. This contrasts to the behaviour with respect to a traditional web content request response, in which the original requested web content to be rendered would be obtained from an origin server or an edge server that cached the original requested web content in response to the initial request in 502. By providing the alternative web content comprising the virtualization client 120, a virtualization layer may be enabled in between a web browser 112 and the original requested web content to enable optimizations, or more generally, modifications with respect to the original requested web content.

In some embodiments, rather than including the original requested web content with the virtualization client 120, the edge server 150 (or content provider system 130) may provide an identification of the original requested web content to be rendered in the alternative web content. For example, a location address where the original requested web content (e.g., URI where the actual original requested web content is located) is to be obtained may be specified in the alternative web content. In this way, rather than publishing web content to be accessible for rendering at a public location address to be utilized by a user to access the published web content, a content publisher publishes the web content at a different location address that will be instead accessed by a virtualization client 120 included in the alternative content provided at the public location address of the original web content.

At 506, an intermediate document object model structure is built. For example, the web browser 112 builds a document object model structure for the alternative webpage received at 504 (hereinafter termed an "intermediate document object model structure"). Building the intermediate document object model structure may include executing program code of the virtualization client 120 included in the received alternative web content, which is described in more detail below. Further, when the alternative web content includes a portion of original requested web content to be rendered, objects corresponding to the included original requested web content portions are inserted in the intermediate document object model structure.

As noted above, building the intermediate document object model structure includes executing program code of the virtualization client 120. For example, the virtualization client 120 included in the received alternative web content may request and receive the original requested web content to be rendered using an alternate location address from where the original requested web content can be obtained. In some embodiments, a portion of the originally requested web content that was included in the received alternative content is requested by the virtualization client 120.

The virtualization client 120 can modify the intermediate document object model structure with data of the original requested web content to create a modified document object model structure (step 508). In some embodiments, location addresses specified in the original requested web content are modified. In another example, the original requested web content is modified for more optimized content delivery and/or rendering. In some embodiments, objects of the original requested web content may be placed in the intermediate document object model structure. For example, the virtualization client 120 can modify the intermediate document object model structure to include objects of the original requested web content to render the original requested web content. Such manipulation can involve creation, deletion, or update of nodes within the intermediate document object model structure, and objects of the original requested web content can be modified before placing such modified objects in the intermediate document object model structure to produce a modified document object model structure.

In some embodiments, virtualization client 120 can intercept requests for one or more resources that are dynamically generated by e.g. script 206-2 and before the request is made via the network. Interception may be implemented by means of function wrapping, whereby the virtualization client 120 effectively traps API calls to the DOM interface, and/or modifies the otherwise standard behaviour of the web browser 112. A first application of this technique involves replacing a location address included in an intercepted request with a translated location address determined using mapping data, described below. By using the translated location address, an initially referenced content may be replaced with a different/modified content and/or requested using a different server.

Once the location address of a resource has been analyzed and replaced with a translated location, if appropriate, the resource is requested via the network and the document object model is updated. Requesting the resource via the network may include further translating at least a portion of the translated location address using a name server (e.g., DNS server) to translate a domain name of the location address to an IP address.

In some embodiments, an inline code inserted in the received web content and separate from the virtualization client 120, may be utilized to intercept a request emanating from e.g. script 206-2 in the original web page and replace the intercepted request with a translated location, as described above. Such inline code effectively supplements the functionality of the virtualization client 120. In other embodiments, a programming language/script file inserted/referenced in the received web content (e.g., and provided with the received web content) is utilized to intercept the request and replace the intercepted request with a translated location. In some embodiments, a programming language/script code can be utilized to intercept the request and replace the intercepted request with a translated location (e.g., requested using and AJAX call or an XMLHttpRequest call to a server such as server system 150). The received code may be encoded in a type of programming language/script based at least in part on a programming language/script that is to utilize the translated location. For example, the code to be utilized to intercept the request and replace the intercepted request with a translated location is encoded in a programming language/script that matches the programming language/script that will be using the translated location (e.g., JavaScript code provided for JavaScript application to utilize the translated location, ActionScript code provided for Flash application to utilize the translated location, native iOS code provided to an iOS application to utilize the translated location, etc.).

In some embodiments, the virtualization client 120 may provide an interface, such as an API, for use by a publisher of the web content to control or manipulate a DOM tree associated with the web content. For example, the interface provided by the virtualization client 120 may provide functionality for transformation of a resource identifier before insertion into the DOM tree associated with the web content. In this respect, the interface provided by the virtualization client 120 may call one or more functions or methods associated with the DOM interface, thereby providing an abstraction for the functionality provided by the DOM interface. In some examples, the inline code inserted into the web content may invoke the interface provided by the virtualization client 120 to manipulate the DOM tree for the web content. In other examples, one or more executable instructions in the web content may invoke the interface provided by the virtualization client 120 to manipulate the DOM tree for the web content. In this manner, the publisher of the web content may utilise or integrate the interface provided by the virtualization client 120 with the webpage to ensure that any resources identifiers are transformed prior to insertion into the DOM tree.

In some embodiments, the mapping data mentioned above may be received in conjunction with the alternative web page, for use by the virtualization client 120 to replace a content location address of a webpage resource to another address specified by the mapping data. The mapping data may include a data structure (e.g., a table, a database, a chart, a hash table, a list, a spreadsheet, etc.) and can be encoded in HTML, e.g., encoded using HTML tags, or in JavaScript Object Notation. In some embodiments, by utilizing the mapping data, one or more content location addresses of the original requested web content may be dynamically modified. By modifying the content location address, referenced content may be replaced with different/modified content and/or provided from a different location. The received mapping data may include one or more entries mapping an initial location address to a translated location address. For example, a mapping data entry maps an initial URI/URL to a translated URI/URL. In another example, a mapping data entry maps an initial URI/URL to a location address that includes an IP address. The mapping data corresponds to the received original requested web content. For example, the received mapping data includes one or more entries that correspond to one or more location addresses referenced by the original requested web content. The mapping data may include an entry that maps a location address of a resource request to a translated location address. The initial location address of the original requested web content to be translated using the mapping data may be a dynamically generated location address. For example, the initial location address may be generated by execution of script 206-2 of the received original requested web content.

In some embodiments, a location address of a network resource can be used to search a data structure that includes the received mapping data. If an entry that matches the location address of the network resource is found, the location address of the network resource is modified using a corresponding translated location address specified by the matching entry. For example, the entry maps an initial URI/URL to a translated URI/URL and the matching initial URI/URL of the network resource is replaced with the translated URI/URL. In another example, a mapping data entry maps an initial URL to a location address that includes an IP address. If a matching entry is not found in the data structure, the initial location address without replacement or translation may be utilized. In some embodiments, if a matching entry is not found in the data structure, the initial location address is modified using a standard default translation. For example, a default translation policy specifies at least a portion of a location address (e.g., domain of the URI) to be replaced with another identifier.

In some embodiments, the mapping data is received together with the alternative web content as a single received content (e.g., specified in the alternative web content), from the same server. Alternatively, the mapping data can be received together with the original requested web content. As a further alternative, the mapping data can be received separately from the alternative web content and the original requested web content. For example, the virtualization client 120 included in the web content can request/receive the mapping data in a separate request.

At 510, one or more resources of the modified document object model structure are requested and received. For example, the web browser 112 traverses the modified document object model structure to retrieve any dependent resources (e.g., images, scripts, video, etc. to be obtained via a network to render a webpage) indicated by any of the nodes in the modified document object model structure via a network. The received resources may be utilized to populate the modified document object model structure and/or provide/render content to a user. In some embodiments, the requests for the one or more resources are requested using corresponding network location addresses that have been modified/translated when modifying the intermediate document object model structure in 508.

In some embodiments, in response to a network resource request, updated mapping data is received in addition to the requested resource content. For example, data updating the previously received mapping data is received along with the requested resource content if the mapping data is to be updated. In some embodiments, the updated mapping data includes a new mapping data to replace the entire previously received mapping data. For example, virtualization client 120 replaces a stored version of the previously received mapping data with the updated mapping data. In some embodiments, the updated mapping data includes only the data required to partially update the previously received mapping data. For example, virtualization client 120 utilizes the received update to modify a portion of the previously received mapping data. The updated mapping data may be received from the same server as the server that provided the requested resource, or from a different server from the server that provided the requested resource content. As further alternatives, the requested resource and the updated mapping data may be received together as a single data package or may be received separately. In some embodiments, the updated mapping data is received as needed without necessarily being received in response to a resource request. For example, the virtualization client 120 can periodically poll a server (e.g., server system 150) for any update to the mapping data. In another example, updates to the mapping data are dynamically provided/pushed to the virtualization client 120 as needed.

As noted above, interception by the virtualization client 120 of API calls emanating from scripts within the alternative web page may be implemented by means of function wrapping, whereby the virtualization client 120 effectively traps API calls to the DOM interface, and modifies the otherwise standard behaviour of the web browser 112 using functionality specific to the virtualization client 120. A second application of this technique involves encoding resource identifiers included in an API call, i.e. request, which is invoked when a script object makes a function call to the DOM interface. This is particularly beneficial when the web browser 112 is configured with a content modification component 114. As noted above, the virtualization client 120 may implement one or more wrapper functions in respect of the XMLHttpRequest API to intercept requests for resources from an external server and mask, or obfuscate, any resource identifiers included in the requests before they are detected and potentially blocked by the content modification component 114. Examples of such resources include a file, an image, a script, a JavaScript, a script element, a web program, a style sheet language object (e.g., CSS file), and other content elements to be obtained to render the web content.

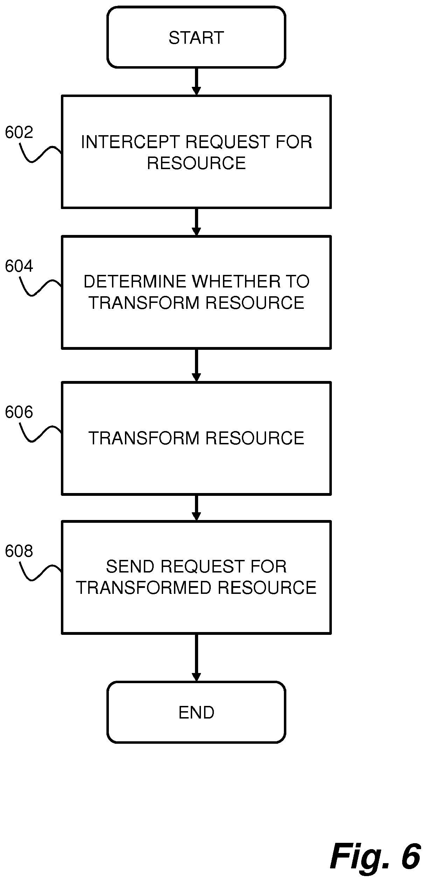

This second application will now be described with reference to Figure 6. At 602, a request for a resource, which e.g. is generated by a script object in the DOM tree, is intercepted and at 604 the virtualization client 120 determines whether to transform an identifier of the resource included in the intercepted request. In some embodiments, the identifier of the resource is to be transformed if the resource is known or vulnerable to be targeted by a third-party content modifier such as the content modification component 114. The identifier of the resource is then selected for transformation to prevent the third-party content modifier from recognizing the resource. For example, resources of one or more specified types (e.g., specific file type, script etc.) are candidates for identifier transformation. In another example, resources to be obtained from one or more specified Internet domains (e.g., a portion of a URI of the resource matches) or servers are selected for identifier transformation. In some embodiments, the identifier of the resource is to be transformed even if the resource is known to be not vulnerable or not targeted by a third-party content modifier. For example, by also transforming identifiers of resources that the third-party content modifier does not desire to modify/block, the third-party content modifier is unable to simply block/modify all requests for resources with transformed/obfuscated identifiers and is also unable to take a whitelist approach of only allowing requests for resources with known/recognized identifiers. In some embodiments, it is determined to not transform the identifier of the resource if the identifier has been already transformed (e.g., by means of the mapping data). In some embodiments, every resource identifier of a web content is to be transformed if it has not been already transformed. Examples of the identifier include at least a portion of a name, a filename, a variable name, a URI, or other identifier.

If at 604 it is determined that the identifier of the resource is to be transformed, at 606, the identifier of the resource is transformed. For example, transforming the resource identifier includes modifying, by means of encoding, a name of the resource. In some embodiments, the encoding involves encrypting at least a portion of the resource identifier. For example, the resource identifier or a portion thereof is encrypted using a public key of a public key cryptography that can be only decrypted using a private key corresponding to the public key. The key utilized to encrypt the resource identifier may be specific to a content provider of the resource, a recipient (e.g., client) of the resource, an intermediary server performing the encryption, a resource type, and/or a network/Internet domain/URI of the resource. In some embodiments, the key utilized to encrypt the resource identifier is common across various different content providers, recipients (e.g., clients), intermediary servers performing the encryption, resource types, and/or network/Internet domains/URIs. In a preferred embodiment the key utilized to encrypt the resource identifier is changed over time. For example, in order to prevent a third-party content modifier from learning a pattern of the encryption, the encryption key is changed periodically. In some embodiments, encoding the resource identifier includes hashing at least a portion of the resource identifier. For example, a hash value is determined as the transformed identifier using a hashing function and the original resource identifier is stored in a corresponding hash table. In some embodiments, the original resource identifier is stored in a table, a database, or other data structure to be utilized to determine the original resource identifier from the transformed identifier. In some embodiments, transforming the identifier of the resource includes modifying the DOM tree that referenced the resource to include the transformed identifier.

At 608, the request is allowed, which is to say that the intercepted request is allowed to be made using the transformed identifier of the resource, resulting in the web browser 112 sending a GET request for the transformed resource via the network 140.

Encryption keys (e.g., public key) may be received or obtained from a server periodically. Alternatively, a key may be passed from the server system 150 (or content provider system 130) to the virtualization client 120 via the alternative web page; for example, the key can be passed via inline code in the underlying HTML of the alternative web page. Since the keys originate from the edge server 150 (or content provider system 130), the server also has the key that has been used by the virtualization client 120 to encode the resource. Consequently the server can decode the encoded resource contained in the request sent to the network resulting from step 608, and thereafter obtain the requested resource from the relevant content server.

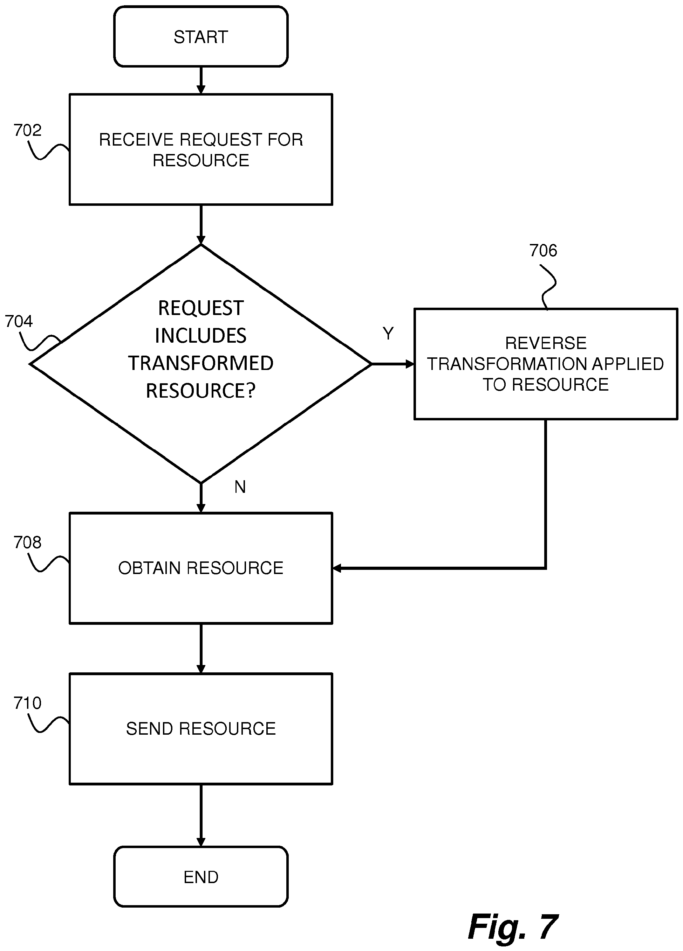

Figure 7 is a flowchart illustrating an embodiment of a process for providing a resource in response to a request. The process of Figure 7 may be implemented on server system 150 and/or content provider system 130.

At 702, a request for a dependent resource of the webpage processed by the web browser 112 and virtualization client 120 is received by the server. In some embodiments, the received request is the request of 510 of Figure 5 and in other embodiments it is the request of 608 of Figure 6; in other embodiments it may be a request that combines transformations according to the processes described with reference to Figures 5 and 6.

At 704, it is determined whether the request identifies the resource using a transformed identifier. For example, it is determined whether the identifier of the resource included in the request is a translated, encrypted, hashed, or otherwise obfuscated/protected identifier.

If at 704 it is determined that the request identifies the resource using a transformed identifier, at 706 the transformed identifier is translated back to its original identifier. Translating the transformed identifier may include using the mapping data as described with reference to Figure 5, or decrypting at least a portion of the transformed identifier using the key that the server provided to the virtualization client 120 as described with reference to Figure 6. For example, if the transformed resource identifier has been encrypted using a public key of a public key cryptography it is decrypted using a private key corresponding to the public key. In some embodiments, translating the resource identifier includes using at least a portion of the transformed identifier as the hash value and obtaining the original identifier from a hash table. In some embodiments, the original resource identifier has been stored in a table, a database, or other data structure to be utilized to determine the original resource identifier from the transformed identifier. For example, at least a portion of the transformed identifier is utilized to perform a lookup of the data structure to find an entry storing the original identifier.

At 708, the resource is obtained from the relevant content server, using the original identifier determined in 706. The resource may be obtained from a cache of an intermediary server. Alternatively, the resource is obtained by requesting and receiving the resource via a network from a content server (e.g., from content provider system 130) using a URI that includes the determined original identifier.

At 710, the obtained resource is provided to the web browser 112 as a response to the request received in 702.

In various embodiments, modifying the original webpage by creating a modified document object model structure different from the document object model structure corresponding to (e.g., specified by) the received desired webpage may be applicable to additional and different types of optimizations. For example, in some embodiments, optimized delivery of information over a network may involve segmentation and reprioritization of downloaded information. As a result of such techniques, the delivery of the information (e.g., the order in which the information is delivered or the granularity of the information delivered) and the actual content of the delivered information corresponding to any nodes of the DOM tree structure may be altered, thereby speeding up the rendering of a webpage without compromising the end-user's experience.

In various embodiments, generating the modified document object model structure includes modifying the intermediate document object model structure (e.g., selecting a modification to be performed) based on a property of a client device (e.g., detected property) that is to render the original requested web content. For example, the optimizations of the original requested web content performed by the virtualization client 120 take into consideration a property of the client device. For the same original requested web content, this may allow one type of optimization to be performed for one type of user system while allowing a different optimization to be performed for another type of user system. Examples of the property of the client device include the following: a type of web browser, a web browser version, available plugin/extensions of a web browser, a java processing software version, a type of operation system, a type of network connection, a network connection speed, a display property, a display type, a display window property, a type of user device, resources of a user system, or a system property of a user system.

According to some embodiments, rather than performing resource identifier transformation by default, resource identifier transformation is only performed by the virtualization client 120 when it is detected that the web browser 112 comprises content modification functionality. For example, existence/operation/installation of a third-party program/plug-in that is modifying, adding, or blocking at least a portion of content resources is detected and resource identifier transformation/obfuscation is only performed upon detection of the third-party content modifier (e.g., content blocker). The detection may be performed using an included program/script in the web content to detect whether certain content components are configured or installed for the web browser 112. In this manner, resource identification transformation is only performed when required, thereby reducing processing load for the web browser 112.

According to some embodiments, the virtualization component 120 may be configured to apply a transformation to resources associated with a webpage, in addition to applying a transformation to resource identifiers associated with the webpage. For example, the virtualization component may apply a transformation to a resource in order to mask the content of that resource from content modification functionality associated with the web browser 112. Similarly, in some examples, the virtualization component 120 may be configured to transform the content of a resource in response to transforming the content of a resource identifier associated with a different resource. For example, the virtualization component 120 may be configured to apply a transform to content displayed within an HTML iFrame element, in response to a transform being applied to a resource identifier for the iFrame element itself.

According to some embodiments, the web browser 112 may store one or more resources associated with the webpage in a local cache associated with the web browser. For example, the web browser 112 may cache a resource in response to an earlier network request in respect of that resource using a transformed resource identifier. In this example, the web browser 112 may retrieve the cached resource from the cache based on the transformed resource identifier, rather than issuing a network request for the resource to the server system 150 using the transformed resource identifier.

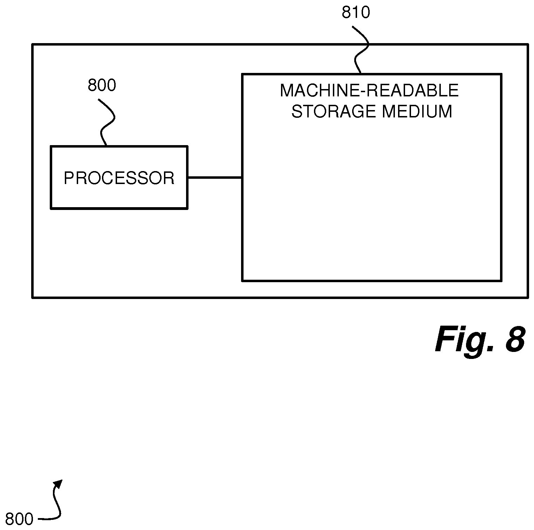

The above embodiments can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. Figure 8 depicts an exemplary processing system 800 configured on the server system 150 and on client device 110, showing a processor 800 and machine-readable storage medium 810. The machine-readable storage medium comprises a set of instructions, which are specific to the functionality implemented on the server system 150 and client device 110 respectively to perform the disclosed embodiments.

In this description, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term "processor" refers to one or more devices, circuits, and/or processing cores configured to process data, such as computer program instructions.

The above embodiments are to be understood as illustrative examples of the invention. Further embodiments of the invention are envisaged. For example, while the examples describe virtualization client 120 being configured to intercept API calls originating from script objects within a web page, the virtualization client 120 can be configured to identify resource identifiers in files such as CSS files and resources such as images defined therein. Further, the server system 150 may be configured to search requested web content using pattern matching techniques prior to inserting the above-mentioned inline code into the alternative web page that is returned to the client device 110. In this way the inline code is selected in dependence on specifically recognized content in the web content.

Furthermore, equivalents and modifications not described above may also be employed without departing from the scope of the invention, which is defined in the accompanying claims.

## Claims

1. A method of controlling access to network resources requested by a client device (10), the method comprising:
receiving a first request at a proxy server (150), the proxy server (150) acting as a proxy between the client device (10) and a content provider (130), the first request being for web content from a web browser (112) installed on the client device (110), and the requested web content originating at the content provider (130) and comprising one or more executable instructions; and
delivering the requested web content and a script (120) to the web browser, the script being executable in the web browser while a document object model (118) corresponding to the web content is being built, to:
intercept a second request for a resource by trapping an API call to an interface of the document object model, the second request comprising a resource identifier associated with a resource of the web content of the first request, the resource being located at the content provider (130), and the second request being generated by execution of the one or more executable instructions by the web browser;
mask the resource identifier through at least one of encryption, hashing, and obfuscation to produce a transformed resource identifier; thereafter:
insert said transformed resource identifier into the document object model, such that a third-party content modification component (114) associated with the web browser (112) and that is capable of accessing the document object model does not recognize the resource and subsequently block retrieval of the resource associated with the transformed resource identifier;
generate a third request for the web content, the third request comprising the transformed resource identifier,
wherein the script is executable in the web browser to intercept a plurality of said second requests, and wherein the resource of at least one of the plurality of second requests is not a resource targeted by the third-party content modification component (114), whereby the transformed resource identifier of the corresponding third request corresponds to the resource that is not targeted, such that the third-party content modification component (114) is unable to recognize the resource and determine that the resource is not targeted;
receiving, by the proxy server (150), the third request;
identifying, by the proxy server (150), the transformed resource identifier;
translating, by the proxy server (150), the transformed resource identifier back to its original resource identifier in order to retrieve the resource from the content provider (130);
obtaining the resource from the content provider (130); and
providing the obtained resource to the web browser (112).

2. A method of controlling access to the network resources according to claim 1, wherein the script is executable to intercept all requests for web content from the web browser (112) and process the resource identifiers of the respective requests to produce corresponding transformed resource identifiers, such that upon execution of each request using the corresponding transformed resource identifiers, corresponding further requests for the web content are generated, whereby the further requests comprise the respective transformed resource identifiers and are received by the proxy server (150), such that the third-party content modification component (114) is unable to recognize and subsequently block retrieval of each of the requested resources.

3. A method of controlling access to network resources according to any one of the preceding claims, further comprising:
processing, at the proxy server (150), an original portion of the web content to produce a transformed portion; and
delivering the web content including the transformed portion to the web browser (112);
wherein the script (120) is executable in the web browser to process the transformed portion of the web content to recover the original portion of the web content.

4. A method of controlling access to the network resources according to claim 3, wherein the processing of the original portion of the web content comprises:
identifying, at the proxy server (150), a static resource of the original portion of the web content requested in the first request; and
processing a resource identifier corresponding to the static resource to produce a transformed resource identifier;
and the delivering of the web content comprises:
delivering a webpage definition (116) to the web browser based on the first request, wherein the webpage definition (116) comprises the script (120) and the transformed resource identifier of the static resource, such that the third-party content modification component (114) is unable to recognize and subsequently block retrieval of the static resource before the webpage definition is rendered by the web browser (112).

5. A method of controlling access to network resources according to any preceding claim, wherein the script (120) is executable in the web browser (112) to provide a wrapper function for the interface of the document object model (118), the wrapper function being configured to intercept the second request to invoke the interface provided by the document object model.

6. A method of controlling access to network resources according to any preceding claim, further comprising delivering, by the proxy server (150), a key to the web browser (112), the key being for use by an encryption algorithm.

7. A method of controlling access to network resources according to claim 6, in which the proxy server (150) modifies the requested web content to include the key.

8. A non-transitory computer-readable storage medium comprising computer-executable instructions which, when executed by a processor of a proxy server (150), cause the proxy server to perform the method according to any one of the preceding claims.

9. A method of controlling access to network resources requested by a client device (10), the method comprising:
sending, by a web browser (112) installed on a client device (110), a first request to a proxy server (150) for web content;
receiving, in the web browser (112), web content comprising one or more executable instructions and a script (120) having an association with the web content,
wherein the script is executable in the web browser while a document object model (118) corresponding to the web content is being built, to:
intercept a second request for a resource by trapping an API call to an interface of the document object model, the second request comprising a resource identifier associated with a resource, the resource being located at a content provider (130) remote from the client device (10) and the second request being generated by execution of the one or more executable instructions by the web browser;
mask the resource identifier through at least one of encryption, hashing, and obfuscation to produce a transformed resource identifier; thereafter:
insert said transformed resource identifier into the document object model such that a third-party content modification component (114) associated with the web browser (112) and that is capable of accessing the document object model does not recognize the resource and subsequently block retrieval of the resource associated with the transformed resource identifier;
generate a third request, the third request comprising the transformed resource identifier,
wherein the script is executable in the web browser to intercept a plurality of said second requests, and wherein the resource of at least one of the plurality of second requests is not a resource targeted by the third-party content modification component (114), whereby the transformed resource identifier of the corresponding third request corresponds to the resource that is not targeted, such that the third-party content modification component (114) is unable to recognize the resource and determine that the resource is not targeted;
sending the third request to a proxy server (150);
thereafter, at the proxy server (150):
identifying that the third request includes the transformed resource identifier; and
translating the transformed resource identifier back to its original resource identifier in order to retrieve the resource from the content provider (130);
obtaining the resource from the content provider (130); and
providing the obtained resource to the web browser (112).

10. A non-transitory computer-readable storage medium comprising computer-executable instructions which, when executed by a processor of a client device (110), causes the client device to perform the method of claim 9.

## Patentansprüche

1. Verfahren zur Zugriffssteuerung auf Netzwerkressourcen, die von einem dienstanfordernden Gerät (10) angefragt wurden, wobei das Verfahren umfasst:
Empfangen einer ersten Anforderung durch einen Proxyserver (150), wobei der Proxyserver (150) als ein Vertreter zwischen dem dienstanfordernden Gerät (10) und einem Inhaltsanbieter (130) agiert, wobei die erste Anforderung für Internetinhalt von einem Internetbrowser (112) ist, der auf dem dienstanfordernden Gerät (110) installiert ist, und der angeforderte Internetinhalt von dem Inhaltsanbieter (130) stammt und ein oder mehrere ausführbare Anweisungen umfasst; und
Ausliefern des angeforderten Internetinhalts und eines Skripts (120) an den Internetbrowser, wobei das Skript im Internetbrowser ausführbar ist, während ein Dokumentenobjektmodell (118), das mit dem Internetinhalt übereinstimmt, aufgebaut wird, zum:
Abfangen einer zweiten Anforderung für eine Ressource durch Einfangen eines API-Aufrufs an eine Schnittstelle des Dokumentenobjektmodells, wobei die zweite Anforderung einen Ressourcenidentifikator aufweist, der mit einer Ressource des Internetinhalts der ersten Anforderung assoziiert ist, wobei die Ressource beim Inhaltsanbieter (130) ansässig ist, und die zweite Anforderung durch ein Ausführen der ein oder mehreren ausführbaren Anweisungen durch den Internetbrowser generiert wird;
Maskieren des Ressourcenidentifikators durch mindestens eines von Kodierung, Zerlegung und Verschleierung, um einen transformierten Ressourcenidentifikator zu erzeugen; danach:
Einfügen des transformierten Ressourcenidentifikators in das Dokumentenobjektmodell, sodass eine Dritte-Partei-Inhaltsmodifikationskomponente (114), die mit dem Internetbrowser (112) assoziiert und fähig ist, auf das Dokumentenobjektmodell zuzugreifen, nicht die Ressource erkennt und folgend einer Blockabfrage der Ressource, die mit dem transformierten Ressourcenidentifikator assoziiert ist;
Generieren einer dritten Anforderung für den Internetinhalt, wobei die dritte Anforderung den transformierten Ressourcenidentifikator umfasst,
wobei das Skript im Internetbrowser ausführbar ist, um mehrere der zweiten Anforderungen abzufangen, und wobei die Ressource mindestens einer der mehreren zweiten Anforderungen keine Ressource ist, auf die die Dritte-Partei-Inhaltsmodifikationskomponente (114) zielt, wobei der transformierte Ressourcenidentifikator der übereinstimmenden dritten Anforderung mit der Ressource übereinstimmt, auf die nicht gezielt wird, sodass die Dritte-Partei-Inhaltsmodifikationskomponente (114) unfähig ist, die Ressource zu erkennen und zu bestimmen, dass nicht auf die Ressource gezielt wird;
Empfangen der dritten Anforderung durch den Proxyserver (150);
Identifizieren des transformierten Ressourcenidentifikators durch den Proxyserver (150);
Übersetzen des transformierten Ressourcenidentifikators zurück zum originalen Ressourcenidentifikator durch den Proxyserver (150), um die Ressource vom Inhaltsanbieter (130) abzurufen;
Erhalten der Ressource vom Inhaltsanbieter (130); und
Bereitstellen der erhaltenen Ressource für den Internetbrowser (112).

2. Verfahren zur Zugriffssteuerung auf Netzwerkressourcen nach Anspruch 1, wobei das Skript ausführbar ist, um alle Anforderungen für Internetinhalt vom Internetbrowser (112) abzufangen, und die Ressourcenidentifikatoren der jeweiligen Anforderungen zu verarbeiten, um übereinstimmende transformierte Ressourcenidentifikatoren zu erzeugen, sodass auf eine Ausführung jeder Anforderung hin, die den übereinstimmenden transformierten Ressourcenidentifikator verwendet, übereinstimmende weitere Anforderungen für den Internetinhalt generiert werden, wobei die weiteren Anforderungen die jeweiligen transformierten Ressourcenidentifikatoren umfassen und durch den Proxyserver (150) empfangen werden, sodass die Dritte-Partei-Inhaltsmodifikationskomponente (114) unfähig zum Erkennen und folgend einer Blockabfrage jeder der angeforderten Ressourcen ist.

3. Verfahren zur Zugriffssteuerung auf Netzwerkressourcen nach einem der vorhergehenden Ansprüche, ferner umfassend:
Verarbeiten eines Originalteils des Internetinhalts zum Erzeugen eines transformierten Teils; und
Ausliefern des Internetinhalts mit dem transformierten Teil an den Internetbrowser (112);
wobei das Skript (120) im Internetbrowser ausführbar ist, um den transformierten Teil des Internetinhalts zu verarbeiten, um den Originalteil des Internetinhalts zurückzugewinnen.

4. Verfahren zur Zugriffssteuerung auf Netzwerkressourcen nach Anspruch 3, wobei das Verarbeiten des Originalteils des Internetinhalts umfasst:
Identifizieren einer statischen Ressource des Originalteils des Internetinhalts, der in der ersten Anforderung angefordert wurde; und
Verarbeiten eines Ressourcenidentifikators, der mit der statischen Ressource übereinstimmt, um einen transformierten Ressourcenidentifikator zu erzeugen;
und das Ausliefern des Internetinhalts umfasst:
Ausliefern einer Internetseitendefinition (116) an den Internetbrowser basierend auf der ersten Anforderung, wobei die Internetseitendefinition (116) das Skript (120) und den transformierten Ressourcenidentifikator der statischen Ressource umfasst, sodass die Dritte-Partei-Inhaltsmodifikationskomponente (114) unfähig zum Erkennen und folgend einer Blockabfrage der statischen Ressource ist, bevor die Internetseitendefinition durch den Internetbrowser (112) ausgeführt wird.

5. Verfahren zur Zugriffssteuerung auf Netzwerkressourcen nach einem der vorhergehenden Ansprüche, wobei das Skript (120) im Internetbrowser (112) ausführbar ist, um eine Hüllfunktion für die Schnittstelle des Dokumentenobjektmodells (118) bereitzustellen, wobei die Hüllfunktion eingerichtet ist, die zweite Anforderung abzufangen, um die Schnittstelle, die durch das Dokumentenobjektmodell bereitgestellt wird, aufzurufen.

6. Verfahren zur Zugriffssteuerung auf Netzwerkressourcen nach einem der vorhergehenden Ansprüche, ferner umfassend das Ausliefern eines Schlüssels an den Internetbrowser (112) durch den Proxyserver (150), wobei der Schlüssel zur Verwendung von einem Kodieralgorithmus ist.

7. Verfahren zur Zugriffssteuerung auf Netzwerkressourcen nach Anspruch 6, bei dem der Proxyserver (150) den angeforderten Internetinhalt modifiziert, um den Schlüssel zu enthalten.

8. Nichtflüchtiges computerlesbares Speichermedium, umfassend computerausführbare Anweisungen, die, wenn sie auf einem Prozessor eines Proxyservers (150) ausgeführt werden, den Proxyserver veranlassen, das Verfahren nach einem der vorhergehenden Ansprüche auszuführen.

9. Verfahren zur Zugriffssteuerung auf Netzwerkressourcen, die durch ein dienstanforderndes Gerät (10) angefordert werden, wobei das Verfahren umfasst:
Senden einer ersten Anforderung an einen Proxyserver (150) für Internetinhalt durch einen Internetbrowser (112), der auf einem dienstanfordernden Gerät (110) installiert ist;
Empfangen von Internetinhalt im Internetbrowser (112), umfassend eine oder mehrere ausführbare Anweisungen, und eines Skripts (120), das eine Assoziierung mit dem Internetinhalt aufweist,
wobei das Skript mit dem Internetbrowser ausführbar ist, während ein Dokumentenobjektmodell (118), das mit dem Internetinhalt übereinstimmt, aufgebaut wird zum:
Abfangen einer zweiten Anforderung für eine Ressource durch Einfangen eines API-Aufrufs an eine Schnittstelle des Dokumentenobjektmodells, wobei die zweite Anforderung einen Ressourcenidentifikator umfasst, der mit einer Ressource assoziiert ist, wobei die Ressource bei einem Inhaltsanbieter (130) entfernt vom dienstanfordernden Gerät (10) ansässig ist, und die zweite Anforderung durch Ausführen der ein oder mehreren ausführbaren Anweisungen durch den Internetbrowser generiert wird;
Maskieren des Ressourcenidentifikators durch mindestens eines von einer Kodierung, Zerlegung und Verschleierung zum Erzeugen eines transformierten Ressourcenidentifikators; danach:
Einfügen des transformierten Ressourcenidentifikators in das Dokumentenobjektmodell, sodass eine Dritte-Partei-Inhaltsmodifikationskomponente (114), die mit dem Internetbrowser (112) assoziiert und fähig ist, auf das Dokumentenobjektmodell zuzugreifen, nicht die Ressource erkennt und folgend einer Blockabfrage der Ressource, die mit dem transformierten Ressourcenidentifikator assoziiert ist;
Generieren einer dritten Anforderung, wobei die dritte Anforderung den transformierten Ressourcenidentifikator umfasst,
wobei das Skript im Internetbrowser ausführbar ist, um mehrere der zweiten Anforderungen abzufangen, und wobei die Ressource mindestens einer der mehreren zweiten Anforderungen keine Ressource ist, auf die die Dritte-Partei-Inhaltsmodifikationskomponente (114) zielt, wobei der transformierte Ressourcenidentifikator der übereinstimmenden dritten Anforderung mit der Ressource übereinstimmt, auf die nicht gezielt wird, sodass die Dritte-Partei-Inhaltsmodifikationskomponente (114) unfähig ist, die Ressource zu erkennen und zu bestimmen, dass nicht auf die Ressource gezielt wird;
Senden der dritten Anforderung an den Proxyserver (150);
danach in dem Proxyserver (150):
Identifizieren, dass die dritte Anforderung den transformierten Ressourcenidentifikator umfasst; und
Übersetzen des transformierten Ressourcenidentifikators in seinen originalen Ressourcenidentifikator, um die Ressource vom Inhaltsanbieter (130) abzurufen;
Erhalten der Ressource vom Inhaltsanbieter (130); und
Bereitstellen der erhaltenen Ressource für den Internetbrowser (112).

10. Nichtflüchtiges computerlesbares Speichermedium, umfassend computerausführbare Anweisungen, die, wenn sie auf einem Prozessor eines dienstanfordernden Geräts (110) ausgeführt werden, das dienstanfordernde Gerät veranlassen, das Verfahren nach Anspruch 9 auszuführen.

## Revendications

1. Procédé de contrôle d'accès à des ressources de réseau demandées par un dispositif client (10), le procédé comprenant les étapes consistant à :
recevoir une première requête au niveau d'un serveur mandataire (150), le serveur mandataire (150) agissant en tant que mandataire entre le dispositif client (10) et un fournisseur de contenu (130), la première requête étant pour un contenu Web à partir d'un navigateur Web (112) installé sur le dispositif client (110), et le contenu Web demandé étant originaire du fournisseur de contenu (130) et comprenant une ou plusieurs instructions exécutables ; et
livrer le contenu Web demandé et un script (120) au navigateur Web, le script étant exécutable dans le navigateur Web pendant qu'un modèle d'objet de document (118) correspondant au contenu Web est construit, pour :
intercepter une deuxième requête pour une ressource par le piégeage d'un appel API sur une interface du modèle d'objet de document, la deuxième requête comprenant un identifiant de ressource associé à une ressource du contenu Web de la première requête, la ressource étant située au niveau du fournisseur de contenu (130), et la deuxième requête étant générée par l'exécution desdites une ou plusieurs instructions exécutables par le navigateur Web ;
masquer l'identifiant de ressource par au moins l'un d'un chiffrement, d'un hachage et d'un brouillage pour produire un identifiant de ressource transformé ; par la suite :
insérer ledit identifiant de ressource transformé dans le modèle d'objet de document, de sorte qu'un composant de modification de contenu tiers (114) associé au navigateur Web (112) et qui est apte à accéder au modèle d'objet de document ne reconnaît pas la ressource et bloque ensuite la récupération de la ressource associée à l'identifiant de ressource transformé ;
générer une troisième requête pour le contenu Web, la troisième requête comprenant l'identifiant de ressource transformé,
dans lequel le script est exécutable dans le navigateur Web pour intercepter une pluralité desdites deuxièmes requêtes, et dans lequel la ressource d'au moins l'une de la pluralité de deuxièmes requêtes n'est pas une ressource ciblée par le composant de modification de contenu tiers (114), moyennant quoi l'identifiant de ressource transformé de la troisième requête correspondante correspond à la ressource qui n'est pas ciblée, de sorte que le composant de modification de contenu tiers (114) n'est pas apte à reconnaître la ressource et à déterminer que la ressource n'est pas ciblée ;
recevoir, par le serveur mandataire (150), la troisième requête ;
identifier, par le serveur mandataire (150), l'identifiant de ressource transformé ;
traduire, par le serveur mandataire (150), l'identifiant de ressource transformé en son identifiant de ressource d'origine afin de récupérer la ressource à partir du fournisseur de contenu (130) ;
obtenir la ressource à partir du fournisseur de contenu (130) ; et
fournir la ressource obtenue au navigateur Web (112).

2. Procédé de contrôle d'accès aux ressources de réseau selon la revendication 1, dans lequel le script est exécutable pour intercepter toutes les requêtes pour un contenu Web provenant du navigateur Web (112) et traiter les identifiants de ressource des requêtes respectives pour produire des identifiants de ressource transformés correspondants, de sorte que lors de l'exécution de chaque requête à l'aide des identifiants de ressource transformés correspondants, des requêtes supplémentaires correspondantes pour le contenu Web sont générées, moyennant quoi lesdites requêtes supplémentaires comprennent les identifiants de ressource transformés respectifs et sont reçues par le serveur mandataire (150), de sorte que le composant de modification de contenu tiers (114) n'est pas apte à reconnaître et à bloquer ensuite la récupération de chacune des ressources demandées.

3. Procédé de contrôle d'accès à des ressources de réseau selon l'une quelconque des revendications précédentes, consistant en outre à :
traiter, au niveau du serveur mandataire (150), une partie d'origine du contenu Web pour produire une partie transformée ; et
livrer le contenu Web incluant la partie transformée au navigateur Web (112) ;
dans lequel le script (120) est exécutable dans le navigateur Web pour traiter la partie transformée du contenu Web pour récupérer la partie d'origine du contenu Web.

4. Procédé de contrôle d'accès aux ressources de réseau selon la revendication 3, dans lequel le traitement de la partie d'origine du contenu Web comprend les étapes consistant à :
identifier, au niveau du serveur mandataire (150), une ressource statique de la partie d'origine du contenu Web demandé dans la première requête ; et
traiter un identifiant de ressource correspondant à la ressource statique pour produire un identifiant de ressource transformé ;
et la livraison du contenu Web consiste à :
livrer une définition de page Web (116) au navigateur Web sur la base de la première requête, où la définition de page Web (116) comprend le script (120) et l'identifiant de ressource transformé de la ressource statique, de sorte que le composant de modification de contenu tiers (114) n'est apte à reconnaître et à bloquer par la suite la récupération de la ressource statique avant que la définition de page Web soit rendue par le navigateur Web (112).

5. Procédé de contrôle d'accès à des ressources de réseau selon une quelconque revendication précédente, dans lequel le script (120) est exécutable dans le navigateur Web (112) pour fournir une fonction d'enveloppeur pour l'interface du modèle d'objet de document (118), la fonction d'enveloppeur étant configurée pour intercepter la deuxième requête pour invoquer l'interface fournie par le modèle d'objet de document.

6. Procédé de contrôle d'accès à des ressources de réseau selon une quelconque revendication précédente, consistant en outre à livrer, par le serveur mandataire (150), une clé au navigateur Web (112), la clé étant à utiliser par un algorithme de chiffrement.

7. Procédé de contrôle d'accès à des ressources de réseau selon la revendication 6, dans lequel le serveur mandataire (150) modifie le contenu Web demandé pour inclure la clé.

8. Support de stockage non transitoire lisible par ordinateur comprenant des instructions exécutables par ordinateur qui, lorsqu'elles sont exécutées par un processeur d'un serveur mandataire (150), amènent le serveur mandataire à réaliser le procédé selon l'une quelconque des revendications précédentes.

9. Procédé de contrôle d'accès à des ressources de réseau demandées par un dispositif client, le procédé comprenant les étapes consistant à :
envoyer, par un navigateur Web (112) installé sur un dispositif client (110), une première requête à un serveur mandataire (150) pour un contenu Web ;
recevoir, dans le navigateur Web (112), un contenu Web comprenant une ou plusieurs instructions exécutables et un script (120) ayant une association avec le contenu Web,
dans lequel le script est exécutable dans le navigateur Web pendant qu'un modèle d'objet de document (118) correspondant au contenu Web est construit, pour :
intercepter une deuxième requête pour une ressource par le piégeage d'un appel API sur une interface du modèle d'objet de document, la deuxième requête comprenant un identifiant de ressource associé à une ressource, la ressource étant située au niveau d'un fournisseur de contenu (130) à distance du dispositif client (10) et la deuxième requête étant générée par l'exécution desdites une ou plusieurs instructions exécutables par le navigateur Web ;
masquer l'identifiant de ressource par au moins l'un d'un chiffrement, d'un hachage et d'un brouillage pour produire un identifiant de ressource transformé ;
par la suite :
insérer ledit identifiant de ressource transformé dans le modèle d'objet de document de sorte qu'un composant de modification de contenu tiers (114) associé au navigateur Web (112) et qui est apte à accéder au modèle d'objet de document ne reconnaît pas la ressource et bloque ensuite la récupération de la ressource associée à l'identifiant de ressource transformé ;
générer une troisième requête, la troisième requête comprenant l'identifiant de ressource transformé,
dans lequel le script est exécutable dans le navigateur Web pour intercepter une pluralité desdites deuxièmes requêtes, et dans lequel la ressource d'au moins l'une de la pluralité de deuxièmes requêtes n'est pas une ressource ciblée par le composant de modification de contenu tiers (114), moyennant quoi l'identifiant de ressource transformé de la troisième requête correspondante correspond à la ressource qui n'est pas ciblée, de sorte que le composant de modification de contenu tiers (114) n'est pas apte à reconnaître la ressource et à déterminer que la ressource n'est pas ciblée ;
envoyer la troisième requête à un serveur mandataire (150) ;
par la suite, au niveau du serveur mandataire (150) :
identifier que la troisième requête comprend l'identifiant de ressource transformé ; et
traduire l'identifiant de ressource transformé en son identifiant de ressource d'origine afin de récupérer la ressource à partir du fournisseur de contenu (130) ;
obtenir la ressource à partir du fournisseur de contenu (130) ; et
fournir la ressource obtenue au navigateur Web (112) .

10. Support de stockage non transitoire lisible par ordinateur comprenant des instructions exécutables par ordinateur qui, lorsqu'elles sont exécutées par un processeur d'un dispositif client (110), amènent le dispositif client à réaliser le procédé selon la revendication 9.
